(19) Europäisches Patentamt
European Patent Office
Office européen des brevets

(11) Publication number: **0 378 228 A2**

(12) **EUROPEAN PATENT APPLICATION**

(21) Application number: **90100598.3**

(22) Date of filing: **12.01.90**

(51) Int. Cl.5: **C07F 15/02, A01N 49/00, A01N 55/02**

(30) Priority: **13.01.89 CS 232/89**
**13.01.89 CS 233/89**

(43) Date of publication of application:
**18.07.90 Bulletin 90/29**

(84) Designated Contracting States:
**BE CH DE FR GB IT LI NL SE**

(71) Applicant: **CESKOSLOVENSKA AKADEMIE VED**
**Narodni 3**
**Praha 1(CS)**

(72) Inventor: **Streinz, Ludvik, RNDr.**
**Slovenského povstani 3**
**Praha 6(CS)**
Inventor: **Vrkoc, Jan, RNDr.**
**Nad Sarkou 75**
**Praha 6(CS)**
Inventor: **Konecny, Karel**
**Chrudimska 4**
**Praha 3(CS)**
Inventor: **Romanuk, Miroslav, Dipl.Ing., Dr.Sc.**
**Leninova 615/85**
**Praha 6(CS)**

(74) Representative: **Patentanwälte Beetz sen. - Beetz jun. Timpe - Siegfried - Schmitt-Fumian- Mayr**
**Steinsdorfstrasse 10**
**D-8000 München 22(DE)**

(54) **Propheromones, their preparation, and their use for long-term pheromone release.**

(57) The invention relates to propheromones of the formula I,

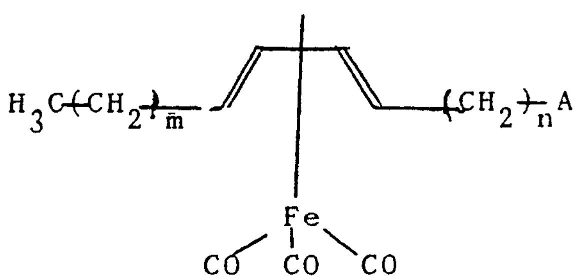

(I),

wherein A is -OH, $-COOCH_3$ or $-OCOCH_3$,
m is O or an integer of 1 to 4, and
n is an integer of 2 to 8,
a method for their preparation by reacting compounds of the formula II

$H_3C(CH_2)_m\ CH = CH - CH = CH(CH_2)_n\ A$ (II),

wherein A, m and n are defined as above,
with iron pentacarbonyl, and to compositions for long-term release of the respective pheromones of formula II.

The compounds of formula I can be used for the preparation of E,E-isomers of alkadien-1-ols free of other isomers, and as propheromones for monitoring, controlling, mass trapping and/or mate disruption of insect pests.

EP 0 378 228 A2

## Propheromones, their preparation, and their use for long-term pheromone release

The invention relates to propheromones and a method for their preparation, composition for the long-term release of pheromones, and their use for monitoring or controlling insect pests, particularly mass trapping or mate disruption.

Compounds containing a system with two conjugated double bonds pertain to sexual pheromones of moth which are being utilized at present to a large extent in the integrated plant protection.

For the use in practice a continuous release of the active compound from the dispenser during a course of at least four or five weeks is essential. Moreover, the dispenser must protect the relatively unstable biologically active compound against isomerization of double bonds leading to a loss of their biological activity. This problem is solved usually by selecting suitable substrates or by adding an antioxidant agent (Brown et al., J. Chem. Ecol. 79, 922 (1986); Vrkoč et al., J. Chem. Ecol. 14, 1347 (1988)).

Preservation of the biological activity together with a long-term continuous release of active compounds can be achieved also by preparation of derivatives thereof comprising a protected functional group (propheromones). The pheromone is released from the derivative under the influence of natural ambient factors. Hitherto, several pheromone derivatives with aldehydic functional groups have been prepared (Beevor et al., Bull. Ent. Res. 67, 439 (1977); Pickett et al., 10th Internat. Congr. of Plant Protection, Brighton, UK, (1983); CS-A-238949). However, an application of pheromone derivatives with a blocked conjugated system of double bonds has not been presented up to now.

An active compound having such a character is e.g. tricarbonyl[(8,9,10,11)-8,10-dodecadien-1-ol]iron which was prepared and described (Hall et al., J.C.S. Chem. Commun. 373 (1981)) as an intermediate during the synthesis of (8E,10E)-8,10-dodecadien-1-ol from tricarbonyl(budatien)-iron which did comprise several reaction steps.

It is the object of the present invention to provide derivatives of pheromones comprising two conjugated C=C-double bonds wherein the conjugated double bond system is blocked, with the possibility of a slow, long-term release of the respective pheromones, a method for their preparation, compositions comprising these propheromones, and their use for monitoring and/or controlling insects or insect pests, respectively.

The above object is achieved according to the claims. The dependent claims relate to preferred embodiments.

The propheromones of the present invention are of the general formula I,

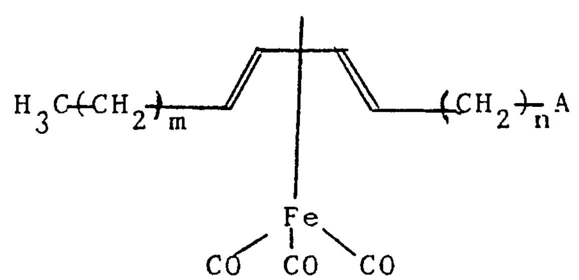

(I),

wherein A is -OH, $-COOCH_3$ or $-OCOCH_3$,
m is O or an integer of 1 to 4, and
n is an integer of 2 to 8,
with exception of tricarbonyl[(8,9,10,11)-8,10-dodecadien-1-ol]iron.

They comprise conjugated double bonds adapted for intra-species communication of insects.

Preferred propheromones are tricarbonyl(8,9,10,11, η)-8,10-dodecadien-1-yl-]acetate iron, tricarbonyl[-(7,8,9,10,η)-7,9-dodecadien-1-ol]iron and tricarbonyl[(7,8,9,10η)-7,9-dodecadien-1-yl-acetate]iron.

The propheromones of formula I are yellowish, oily, low-volatile or non-volatile fluids. Under the action of air oxygen, they are decomposed slowly with liberation of the pure pheromone with E,E-geometry of the double bonds and are completely free of undesired isomers.

The method of the present invention for the preparation of the propheromones of the general formula I including tricarbonyl[(8,9,10,11)-8,10-dodecadien-1-ol]iron, is characterized by reacting any of the isomers or isomer mixtures of compounds of the general formula II,

$H_3C(CH_2)_m-CH = CH - CH = CH(CH_2)_n- A$ (II),

wherein A is -OH, $-COOCH_3$ or $-OCOCH_3$,

m is O or an integer of 1 to 4, and
n is an integer of 2 to 8,
with iron pentacarbonyl at elevated temperature, and isolating the compound of formula I in a suitable, usual manner.

In accordance with a preferred embodiment, the reaction is carried out at a temperature of 60 to 160 °C, and preferably at 140 °C, in an inert organic, nonaqueous medium. It is further preferred to carry out the reaction in diethyleneglycol dimethylether.

The reaction occurs without any catalyst.

The concept of the above method is based on the finding that the derivatives of tricarbonyl(alkadien-1-ol)iron which exhibit several advantageous properties, can be prepared by the reaction of any geometrical isomer of the respective alkadien-1-ol or its acetate with iron penta carbonyl.

The course of the reaction can be examined by means of thin-layer chromatography. Isolation by column chromatography on silica gel is possible after termination of the reaction. The method of this invention can be used for the preparation of the E,E-isomers of alkadien-1-ols and their acetates from Z,E-, Z,Z- and E,Z-isomers or their mixtures. The reaction is suitable especially for processing reaction mixtures containing all four isomers, or for the economic utilization of mother liquors after crystallization of the E,E-isomer.

The compositions of the present invention for the long-term release of pheromones are particularly suitable for monitoring, mass trapping and/or mate disruption of insects and insect pests, respectively, and comprise a pheromone having a system of conjugated C=C double bonds for species communication; they are characterized in that they consist of or contain at least one propheromone of the general formula I as defined above, including tricarbonyl [(8,9,10,11)-8,10-dodecadien-1-ol]iron.

In accordance therewith, a method for monitoring or controlling insects and insect pests, respectively, by releasing a pheromone comprising a conjugated system of C=C-double bonds and eventually trapping and/or hilling the attracted insects is characterized in that one or more propheromones of the general formula I, including tricarbonyl [(8,9,10,11)-8,10-dodecadien-1-ol]iron, or a composition as defined above are used as long-term release pheromone source.

The amount of the pheromone released in a certain time interval can be controlled by the way of application. It is advantageous to apply a thin layer of the compounds of formula I or the respective composition onto an inert surface, e.g. an aluminum or polyethylene foil, or to impregnate filtration paper with the compounds or compositions.

Suitable application forms are known to those skilled in the art.

Preparation of a suitable application form enables to use the compounds according to the invention for monitoring, mass trapping or mate disruption of insect pests. The release of the respective pheromones results e.g. from the action of natural conditions.

The biologically active pheromone is release gradually by the action of oxygen, particularly air oxygen. A strong biological effect is ensured, because only the E,E-isomer is released from the propheromone without contamination with other isomers.

The invention is further illustrated in the following examples, from which examples 1 to 5 relate to various types of compositions and their effectiveness, while Examples 6 to 8 disclose methods of preparation of the respective active compounds.

## Example 1

5.2 mg of tricarbonyl[(8,9,10,11,$\eta$)-8,10-dodecadien-1-ol]iron are applied on filtration paper (Schleicher & Schuell, 30 $\gamma$) area 2 $cm^2$). Dispensers prepared in this manner were hung in the laboratory at a constant ambient temperature of 25 °C and a humidity of 60 %. The amount of (8E,10E)-8,10-dodecadien-1-ol released per 2 hours was determined by the method of Baker (Baker et al., J. Chem. Ecol. 6, 749 (1980)).

The results obtained are shown in Table 1.

Table 1

| Time (d) | 1 | 8 | 21 | 36 | 58 |
|---|---|---|---|---|---|
| Amount of released pheromone (ng/2 h) | 86 | 150 | 159 | 143 | 110 |

The released amount of the pheromone was sufficient for monitoring or controlling of pest during the whole period of one pest generation.

## Example 2

10 mg of tricarbonyl [(8,9,10,11,$\eta$)-8,10-dodecadien-1-ol]iron were applied onto an aluminum foil covered with a polyethylene layer. The area of the carrier was 1 $cm^2$. The amount of released (8E,10E)-8,10-dodecadien-1-ol was determined according to the procedure described in Example 1.

The results obtained are shown in Table 2.

Table 2

| Time (d) | 1 | 12 | 26 | 43 | 64 | 92 | 124 | 153 |
|---|---|---|---|---|---|---|---|---|
| Amount of released pheromone (ng/2 h) | 41 | 25 | 39 | 38 | 61 | 32 | 16 | 15 |

The released amount of the pheromone was sufficient for monitoring or controlling of pest during the whole period of one pest generation.

## Example 3

2.8 mg of tricarbonyl[(8,9,10,11,$\eta$)-8,10-dodecadien-1-yl-acetate]iron were applied onto an aluminum foil covered with a polyethylene layer. The area was 2.7 $cm^2$. The amount of released (8E,10E)-8,10-dodecadien-1-yl-acetate was determined according to the procedure described in Example 1.

The results obtained are shown in Table 3.

Table 3

| Time (d) | 1 | 8 | 22 | 56 | 78 |
|---|---|---|---|---|---|
| Amount of released pheromone (ng/2 h) | 5 | 27 | 51 | 10 | 22 |

The released amount of the pheromone was sufficient for monitoring or controlling of pest during the whole period of one pest generation.

## Example 4

Dispensers prepared according to Example 2 were employed for monitoring Cydia pomonella.

The results of trapping males into sticky traps exposed on 19 July are summarized in the following Table 4.

Table 4

| Dispenser type* | Date of check/number of caught males | | | | |
|---|---|---|---|---|---|
| | 22.7. | 27.7. | 1.8. | 10.8 | 24.8. |
| 1 | 3 | 34 | 66 | 13 | 14 |
| 2 | 2 | 44 | 47 | 15 | 11 |
| * Dispenser 1: Carrier filtration paper, area 2 $cm^2$, amount of active compound 5.2 mg | | | | | |
| * Dispenser 2: Carrier aluminum foil with a polyethylene layer, area 1 $cm^2$, amount of active compound 10 mg. | | | | | |

The values represent the sum of males caught in 2 traps.

**Example 5**

Dispensers prepared according to example 2 with the exception that tricarbonyl[(8,9,10,11,η)-8,10-dodecadien-1-ol]iron was replaced by tricarbonyl[(8,9,10,11,η)-8,10-dodecadien-1-acetate]iron were employed for monitoring Cydia medicaginis.

The results of trapping males in sticky traps, exposed on 11. July, are summarized in the following Table 5.

Table 5

| Dispenser type* | Date of check/number of caught males | | | | |
|---|---|---|---|---|---|
| | 12.7. | 13.7. | 14.7. | 18.7 | 22.7 |
| 3 | 368(61) | 506(84) | 577(96) | 228(48) | 92 |
| * Dispenser 3: Carrier filtration paper, area 3 $cm^2$, amount of active compound 2 mg. | | | | | |

The values represent the sum of males caught in 6 traps; the values in parentheses are the mean value per trap.

**Example 6**

**Preparation of tricarbonyl[(8,9,10,11,η)-8,10-dodecadien-1-ol]iron**

1.8 g (9.9 mmol) of dodecadien-1-ol containing 60 % of (8E,10E)- and 29 % of (8Z,10Z)- and (8Z-10E)-isomers were added with 2.1 ml (19.7 mmol) of iron pentacarbonyl in 10 ml of diethyleneglycol dimethylether with continuous stirring with a magnetic stirrer. After 16 h heating at 140 °C, the reaction mixture was cooled, diluted with 8 ml of ether, and chromatographed on 90 g of silica gel. A mixture of petrolether and ether (1:1) was used for the elution. The chromatography yielded after evaporation 3.6 g of substance containing a mixture of the product with diethyleneglycol dimethylether. The solvent was removed by distillation at 60 °C at a pressure of 13.3 Pa. The yield was 1.11 g.

| Analysis for $C_{15}H_{22}FeO_4$ (322,18): | | |
|---|---|---|
| | % C | % H |
| Calculated: | 55,92 | 6,88 |
| Found : | 56,55 | 7,17 |

IR ($CCl_4$): 3 640, 2 043, 1 977, 1 968, 1 073, 1 059, 1 035 $cm^{-1}$.

**Example 7**

**Preparation of tricarbonyl[8,9,10,11,η)-8,10-dodecadien-1-yl-acetate]iron**

Example 6 was repeated, with the exception that 0.2 g of (8E,10E)-8,10-dodecadien-1-yl-acetate were used as the starting material. The yield of the product was 0.12 g (52 %).

| Analysis for $C_{17}H_{24}FeO_5$ (364.2): | | |
|---|---|---|
| | % C | % H |
| Calculated: | 56.06 | 6.64 |
| Found : | 56.48 | 6.67. |

IR ($CCl_4$): 2 042, 1 974, 1 743, 1 243 $cm^{-1}$.

**Example 8**

**Preparation of tricarbonyl[(7,8,9,10,η)-7,9-dodecadien-1-yl-acetate]iron**

Example 6 was repeated, with the exception that 0.5 g (2.23 mmol) of (7E, 9Z)-7,9-dodecadien-1-yl-acetate were used as the starting material. The yield was 0.224 g.

| Analysis for $C_{17}H_{24}FeO_5$ (364.2): | | |
|---|---|---|
| | % C | % H |
| Calculated: | 56.06 | 6.64 |
| Found : | 56.21 | 6.84. |

IR ($CCl_4$: 2 041, 1 974, 1 774, 1 243 $cm^{-1}$.

**Claims**

1. Propheromones of the general formula I,

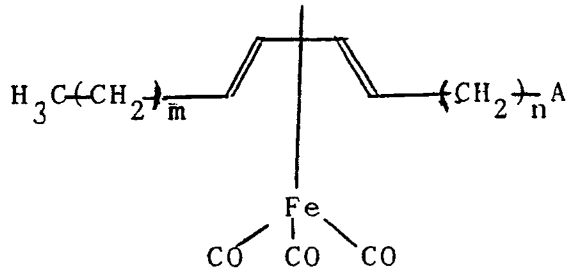

(I),

wherein A is -OH, $-COOCH_3$ or $-OCOCH_3$,
m is O or an integer of 1 to 4, and
n is an integer of 2 to 8,
with exception of tricarbonyl[(8,9,10,11)-8,10-dodecadien-1-ol]iron.

2. Tricarbonyl[(8,9,10,11,η)-8,10-dodecadien-1-yl-acetate]iron.

3. Tricarbonyl[(7,8,9,10,η)-7,9-dodecadien-1-ol]iron.

4. Tricarbonyl[(7,8,9,10,η)-7,9-dodecadien-1-yl-acetate]iron.

5. A method for the preparation of the propheromones of the general formula I according to claims 1 to 4, including tricarbonyl[(8,9,10,11)-8,10-dodecadien-1-ol]iron,
characterized by
reacting any of the isomers or isomer mixtures of compounds of the general formula II,

$H_3C(CH_2)_m-CH = CH - CH = CH(CH_2)_n-A$ (II),

wherein A is -OH, $-COOCH_3$ or $-OCOCH_3$,
m is O or an integer of 1 to 4, and
n is an integer of 2 to 8,
with iron pentacarbonyl at elevated temperature.

6. The method of claim 5, characterized in that the reaction is carried out at a temperature of 60 to 160 °C, preferably at 140 °C, in an inert organic, nonaqueous medium.

7. The method of claims 5 and 6, characterized in that the reaction is carried out in diethyleneglycol dimethylether.

8. Compositions for the long-term release of pheromones, and comprising pheromones having a conjugated system of C=C double bonds for intra-species communication, characterized in that they consist of or contain at least one propheromone of the general formula I according to claims 1 to 4, including tricarbonyl-[(8,9,10,11)-8,10-dodecadien-1-ol]iron.

9. A method for monitoring or controlling insect pests by releasing a pheromone comprising a conjugated system of C=C-double bonds and eventually trapping and/or hilling the attracted insects, characterized in that one or more propheromones of the general formula I according to claims 1 to 4, including tricarbonyl-[(8,9,10,11)-8,10-dodecadien-1-ol]iron, or a composition according to claim 8 are used as long-term release pheromone source.

10. Use of the propheromones according to claims 1 to 4, including tricarbonyl[(8,9,10,11)-8,10-dodecadien-1-ol]iron, and of the compositions according to claim 8 for the release of corresponding pheromones under natural conditions.